# EUROPÄISCHE PATENTSCHRIFT

(11) **EP 3 420 224 B1**
(45) Veröffentlichungstag und Bekanntmachung des Hinweises auf die Patenterteilung: **17.07.2019**
(21) Anmeldenummer: 17705144.8
(22) Anmeldetag: 15.02.2017
(51) Int. Cl.: F03D 17/00

(54) **VERFAHREN ZUR SCHWINGUNGSZUSTANDSÜBERWACHUNG EINER WINDKRAFTANLAGE**
METHOD FOR MONITORING THE VIBRATIONAL STATE OF A WIND TURBINE
PROCÉDÉ POUR SURVEILLER L'ÉTAT OSCILLATOIRE D'UNE ÉOLIENNE

(30) Priorität: 25.02.2016 DE 102016203013
(43) Veröffentlichungstag der Anmeldung: 02.01.2019
(73) Patentinhaber: innogy SE, 45128 Essen (DE)
(72) Erfinder: FRANKE, Jan-Bernd, 25336 Elmshorn (DE); KULSE, Sebastian, 46117 Oberhausen (DE)
(74) Vertreter: Richly & Ritschel Patentanwälte PartG mbB
(86) Internationale Anmeldenummer: PCT/EP2017/053426
(87) Internationale Veröffentlichungsnummer: WO 2017/144327

(56) Entgegenhaltungen:
- US-A1- 2009 319 199
- US-A1- 2013 167 624

## Beschreibung

Die vorliegende Erfindung betrifft ein Verfahren zur Schwingungszustandsüberwachung einer Windraftanlage.

Windkraftanalgen, die auch als Windenergieanlagen bezeichnet werden, sind einer Vielzahl Schwingungen anregender Einflüssen ausgesetzt. Ferner ist insbesondere die Gondel einer Windkraftanlage aufgrund der Drehung der Rotornabe und der mit der Gondel verbundenen Rotorblätter permanent Schwingungen ausgesetzt, auch wenn der Wind mit einer konstanten Geschwindigkeit auf die Rotorblätter trifft.

US 2009/0319199 A1 offenbart ein Verfahren zur Überwachung einer Windkraftanlage.

Aus dem Stand der Technik ist es bekannt, das Schwingungsverhalten von Windkraftanlagen mit Beschleunigungssensoren zu überwachen, die an einem Bauteil der Windkraftanlage, vorzugsweise an der Gondel der Windkraftanlage angebracht sind. Mittels der Beschleunigungssensoren lassen sich Beschleunigungen des Bauteils repräsentierende Beschleunigungswerte erfassen, die von einer Steuerung der Windkraftanlage verarbeitet werden, indem die erfassten Beschleunigungswerte mit vorgegebenen Beschleunigungsgrenzwerten verglichen werden. Bei Überschreiten eines Beschleunigungsgrenzwertes werden Alarme ausgelöst und/oder die Windkraftanlage gestoppt. Es handelt sich bei dieser Schwingungsüberwachungsart um eine einfache Sensorik und um eine einfache Überwachungslogik, die aufgrund von Zulassungsvorgaben und/oder Zertifizierungsanforderungen in jeder Windkraftanlage vorhanden sind.

Diese Art der Schwingungsüberwachung wird eingesetzt, um zu verhindern, dass die Windkraftanlage kurzzeitig in Resonanz gerät. Solche Resonanzen können durch ungünstige äußere Anregungen/Einflüsse, so wie beispielsweise außergewöhnliche Wind- und/oder Wellenverhältnisse sowie Fehlfunktionen der Windkraftanlagenregelung entstehen. Ein länger fortwährender Betrieb einer Windkraftanlage im Zustand der Resonanz kann zu Schäden und kurzfristigem Strukturversagen von Bauteilen der Windkraftanlagen führen.

Die Beschleunigungsgrenzwerte zur Auslösung eines Alarms und zum Einleiten einer Abschaltung der Windkraftanlage sind relativ hoch, damit es im regulären Betrieb der Windkraftanlage nur zur wenigen Alarmauslösungen und Abschaltungen kommt. Ferner besteht bei dem aus dem Stand der Technik bekannten Verfahren zur Überwachung des Schwingungszustandes einer Windkraftanlage das Problem, dass der Beschleunigungsgrenzwert zur Auslösung eines Alarms häufig erst erreicht wird, wenn beispielsweise die strukturelle Integrität eines Rotorblattes derart eingeschränkt ist, dass sehr kurze Zeit (wenige Sekunden) nach Überschreiten des Beschleunigungsgrenzwertes zur Auslösung eines Alarms bereits der Beschleunigungsgrenzwert zur Abschaltung der Windkraftanlage überschritten wird, weil eine Beschädigung des Rotorblattes sehr schnell voranschreitet, beispielsweise ein ganzes Rotorblatt abgeworfen wird.

Diese Form der Schwingungszustandsüberwachung ist geeignet, um kurzfristiges strukturelles Versagen durch resonanzbedingte Überlastung zu vermeiden. Für eine Zustandsbewertung der gesamten Windkraftanlage oder einzelne derer Komponenten/Bauteile, beispielsweise die Rotorblätter, ist diese Schwell- oder Grenzwertüberwachung nicht geeignet, da geringe Unterschiede im Schwingungsverhalten nicht zu einer Auslösung der sehr hoch liegenden Alarm- oder Abschaltschwellen führen.

Die der vorliegenden Erfindung zugrundeliegende Aufgabe ist die Bereitstellung eines Verfahrens zur Schwingungszustandsüberwachung einer Windkraftanlage, mittels dem eine Reduzierung der strukturellen Integrität eines Bauteils der Windkraftanlage frühzeitig erkannt werden kann.

Die der vorliegenden Erfindung zugrundeliegende Aufgabe wird durch ein Verfahren mit den Merkmalen des Anspruchs 1 gelöst. Vorteilhafte Ausgestaltungen des erfindungsgemäßen Verfahrens sind in den abhängigen Ansprüchen beschrieben.

Im Genaueren wird die der vorliegenden Erfindung zugrundeliegende Aufgabe durch ein Verfahren zur Schwingungszustandsüberwachung einer Windkraftanlage gelöst, das die folgenden Verfahrensschritte aufweist:
- Erfassen einer Vielzahl von Beschleunigungswerten, die Beschleunigungen repräsentieren, denen ein Bauteil der Windenergieanlage ausgesetzt ist, jeweils zu unterschiedlichen Zeitpunkten innerhalb eines vorgegebenen Zeitintervalls;
- Speichern der Beschleunigungswerte in einem Beschleunigungsdatensatz;
- Erzeugen einer Summenhäufigkeitsverteilung basierend auf dem Beschleunigungsdatensatz;
- Vergleichen eines ersten Summenhäufigkeitswertes der Summenhäufigkeitsverteilung mit einem zweiten Summenhäufigkeitswert einer Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

Mittels des erfindungsgemäßen Verfahrens zur Schwingungszustandsüberwachung einer Windkraftanlage lassen sich Veränderungen und Schwächungen der strukturellen Integrität von Bauteilen der Windkraftanlage frühzeitig erkennen. Damit kann verhindert werden, dass plötzlich und überraschend ein die Funktionstüchtigkeit der Windkraftanlage verhindernder Schaden, so wie beispielsweise ein Abwerfen eines Rotorblattes der Windkraftanlage, auftritt. Ein entsprechender die Funktionstüchtigkeit der Windkraftanlage verhindernder Schaden kann beispielsweise durch Brechen eines Befestigungsbolzens zum Befestigen eines Rotorblattes an der Rotornabe eingeleitet werden. Nach Brechen des Befestigungsbolzens können infolge dessen die Belastungsgrenzen weiterer Befestigungsbolzen überschritten werden, so dass letztendlich das Rotorblatt von der Rotornabe abgeworfen wird.

Veränderungen und Schwächungen der strukturellen Integrität der Windkraftanlage lassen sich mittels des erfindungsgemäßen Verfahrens frühzeitig erkennen, da sich einen Defekt eines Bauteils der Windkraftanlage, so wie beispielsweise ein Riss in einem Verbindungsbolzen, ein Riss in einem Teil des Rotorblatts oder ein Riss in einem Teil der Rotornabe, ein Lagerschaden der Rotornabe oder ein Lagerschaden des Blattlagers usw. in einer Veränderung der Schwingungscharakteristik der Windkraftanlage niederschlägt. Wenn beispielsweise ein Riss in einem Verbindungsbolzen vorliegt, führt dies zu einer verminderten Verbindungskraft zwischen dem Rotorblatt und der Rotornabe, so dass sich während des Betriebs der Windkraftanlage größere Schwingungen und somit größere Beschleunigungen der Gondel einstellen.

Durch Berücksichtigen einer Vielzahl von Beschleunigungswerten, die Beschleunigungen repräsentieren, die ein Bauteil (z.B. die Gondel) der Windkraftanlage während deren Betrieb ausgesetzt ist, kann eine Veränderung der Schwingungscharakteristik, die mit einer Veränderung der strukturellen Integrität der Windkraftanlage verbunden ist, verbessert festgestellt werden. Die Summenhäufigkeitsverteilung der Beschleunigungswerte des Bauteils basiert auf einer Vielzahl von Beschleunigungswerten, die Beschleunigungen des Bauteils der Windkraftanlage repräsentieren, die das Bauteil ausgesetzt ist, so dass eine Veränderung der Schwingungscharakteristik, z.B. eine Erhöhung eines Teils oder sämtlicher Beschleunigungswerte, zuverlässig erkannt werden kann.

Innerhalb des vorgegebenen Zeitintervalls werden Beschleunigungswerte a₁, a₂, a₃, ..., aₖ erfasst und im Beschleunigungsdatensatz gespeichert. Jeder dieser Beschleunigungswerte tritt mit einer absoluten Häufigkeit von n₁, n₂, n₃, ..., nₖ und mit einer relativen Häufigkeit von h₁, h₂, h₃, ..., hₖ auf, wobei die Summe der relativen Häufigkeiten stets 1 ergibt, so dass h₁ + h₂ + h₃ + ... + hₖ = 1 gilt. Die Summenhäufigkeit F(a) ist die Summe der relativen Häufigkeiten aller Beschleunigungswerte aᵢ, die kleiner oder gleich a sind. Die Summenhäufigkeitsverteilung ist die Funktion der Summenhäufigkeit in Abhängigkeit von den Beschleunigungswerten. Die Summenhäufigkeitsverteilung kann graphisch wiedergegeben werden, wobei die relativen Summenhäufigkeiten, die auch in Prozent angegeben werden kann, gegen die Beschleunigungswerte aufgetragen werden. Üblicherweise werden dafür die Beschleunigungsmesswerte auf der Abszisse und die relative Summenhäufigkeit auf der Ordinate aufgetragen.

Aus der Summenhäufigkeitsverteilung lässt sich folglich für einen Beschleunigungswert die relative Summenhäufigkeit leicht ermitteln. So kann aus der Summenhäufigkeitsverteilung leicht der Anteil aller Schwingungen, die das Bauteil der Windenergieanlage ausgesetzt ist, ermittelt werden, die kleiner oder gleich einem vorgegebenen Beschleunigungswert sind. Beispielsweise lässt sich aus der Summenhäufigkeitsverteilung ermitteln, dass 60% aller Schwingungen, die das Bauteil der Windenergieanlage ausgesetzt ist, kleiner oder gleich 9 mg (mg = Milli-g = 1/1000 * 9.81 m/s²) sind.

Das Erfassen der Vielzahl von Beschleunigungswerten erfolgt innerhalb eines vorgegebenen Zeitintervalls. Dabei können die jeweiligen Beschleunigungswerte zu Zeitpunkten ermittelt werden, die äquidistante (z.B. Erfassen und Speichern eines Beschleunigungswertes jede Sekunde, jede 10 Sekunden, ...) oder nicht äquidistante Zeitabstände zueinander aufweisen.

Die Beschleunigungswerte sind vorzugsweise Beschleunigungsmesswerte des Bauteils, die eine Bewegung/Beschleunigung des Bauteils in einer senkrecht zur Windrichtung orientierten Schwingungsrichtung repräsentieren. Ferner können auch Beschleunigungsmesswerte in Windrichtung und/oder rotatorisch am Triebstrang erfasst und für das erfindungsgemäße Verfahren verwendet werden, um ein fehlerhaftes Regelverhalten der Windkraftanlage sicher zu detektieren.

Unter einem Bauteil der Windkraftanlage ist beispielsweise die Gondel oder ein Rotorblatt der Windkraftanlage zu verstehen.

Die Grenzsummenhäufigkeitsverteilung kann beispielsweise mittels einer aeroelastischen Simulation des Windkraftanalagenverhaltens ermittelt werden.

Das erfindungsgemäße Verfahren kann auch als Verfahren zur Vermeidung eines plötzlichen Ausfalls einer Windkraftanlage durch übermäßige Schwingungen bezeichnet werden.

Vorzugsweise wird die Grenzsummenhäufigkeitsverteilung durch folgende Verfahrensschritte erzeugt, die in einem Zeitintervall vor dem Erfassen der Vielzahl von Beschleunigungswerten ausgeführt werden:
- Erfassen einer Vielzahl von Beschleunigungswerten, die Beschleunigungen repräsentieren, denen das Bauteil der Windenergieanlage ausgesetzt ist, jeweils zu unterschiedlichen Zeitpunkten innerhalb eines vorgegebenen Initialzeitintervalls;
- Speichern dieser Beschleunigungswerte in einem Initialbeschleunigungsdatensatz;
- Erzeugen einer Initialsummenhäufigkeitsverteilung basierend auf dem Initialbeschleunigungsdatensatz; und
- Erzeugen der Grenzsummenhäufigkeitsverteilung basierend auf der ermittelten Initialsummenhäufigkeitsverteilung.

Das entsprechend ausgebildete Verfahren bietet den Vorteil, dass zum Erzeugen der Grenzsummenhäufigkeitsverteilung die Schwingungshistorie des Bauteils der Windkraftanlage herangezogen wird. Somit lassen sich Veränderungen der Schwingungscharakteristik der Windenergieanlage besonders gut nachvollziehen und detektieren.

Dieses Verfahren unter Berücksichtigung der Schwingungshistorie des Bauteils der Windkraftanlage lässt sich auch durch folgende Verfahrensschritte beschreiben:
- Erfassen einer Vielzahl von ersten Beschleunigungswerten, die Beschleunigungen repräsentieren, die ein Bauteil der Windenergieanlage ausgesetzt ist, jeweils zu unterschiedlichen Zeitpunkten innerhalb eines vorgegebenen ersten Zeitintervalls;
- Speichern der ersten Beschleunigungswerte in einem ersten Beschleunigungsdatensatz;
- Erzeugen einer ersten Summenhäufigkeitsverteilung basierend auf dem ersten Beschleunigungsdatensatz;
- Erzeugen einer Grenzhäufigkeitsverteilung basierend auf der ermittelten ersten Summenhäufigkeitsverteilung;
- Erfassen einer Vielzahl von zweiten Beschleunigungswerten, die Beschleunigungen repräsentieren, die das Bauteil der Windenergieanlage ausgesetzt ist, jeweils zu unterschiedlichen Zeitpunkten innerhalb eines zweiten Zeitintervalls;
- Speichern der zweiten Beschleunigungswerte in einem zweiten Beschleunigungsdatensatz;
- Erzeugen einer zweiten Summenhäufigkeitsverteilung basierend auf dem zweiten Beschleunigungsdatensatz;
- Vergleichen eines Summenhäufigkeitswertes der zweiten Summenhäufigkeitsverteilung mit einem Summenhäufigkeitswert der Grenzsummenhäufigkeitsverteilung für zumindest einen Beschleunigungswert; und
- Ausgeben eines Warnsignals, wenn der Summenhäufigkeitswert der Grenzsummenhäufigkeitsverteilung größer ist als der Summenhäufigkeitswert der zweiten Summenhäufigkeitsverteilung.

Das zweite Zeitintervall ist dem ersten Zeitintervall zeitlich nachfolgend.

Vorzugsweise wird die Grenzsummenhäufigkeitsverteilung für eine Windkraftanlage einer Windkraftanlagenflotte bestehend aus einer Vielzahl von baugleichen Windkraftanlagen durch folgende Verfahrensschritte erzeugt wird, die in einem Zeitintervall vor Erfassen der Vielzahl von Beschleunigungswerten ausgeführt werden:
- für zumindest zwei Windkraftanlagen der Windkraftanlagenflotte Erfassen einer Vielzahl von Beschleunigungswerten, die Beschleunigungen repräsentieren, denen das Bauteil der jeweiligen Windenergieanlage ausgesetzt ist, jeweils zu unterschiedlichen Zeitpunkten innerhalb eines vorgegebenen Initialzeitintervalls;
- Speichern dieser Beschleunigungswerte in einem Initialbeschleunigungsdatensatz;
- Erzeugen einer Initialsummenhäufigkeitsverteilung basierend auf dem Initialbeschleunigungsdatensatz; und
- Erzeugen der Grenzsummenhäufigkeitsverteilung basierend auf der ermittelten Initialsummenhäufigkeitsverteilung.

Das entsprechend ausgebildete Verfahren bietet den Vorteil, dass zum Erzeugen der Grenzsummenhäufigkeitsverteilung die Schwingungscharakteristiken einer Vielzahl von baugleichen Windkraftanlagen herangezogen werden, so dass die so erzeugte Grenzsummenhäufigkeitsverteilung genauer ist. Eventuelle Ausreißer von Beschleunigungswerten bei einer Windkraftanlage, die auch zur Ermittlung der Grenzsummenhäufigkeitsverteilung herangezogen wird, mitteln sich durch Berücksichtigung von Beschleunigungswerten weiterer Windkraftanlagen, die auch zur Ermittlung der Grenzsummenhäufigkeitsverteilung herangezogen werden, heraus. Somit kann die Veränderung der Schwingungscharakteristik und somit beispielsweise eine Veränderung der strukturellen Integrität der zu überprüfenden/überwachenden Windkraftanlage verbessert festgestellt werden, wodurch sich die Betriebssicherheit der zu überprüfenden/überwachenden Windkraftanlage nochmals erhöht.

Die Windkraftanlagenflotte besteht aus einer Vielzahl von baugleichen Windkraftanlagen. Diese müssen nicht notwendigerweise in einem Windkraftanlagenpark zusammengefasst sein. Die jeweiligen Windkraftanlagen der Windkraftanlagenflotte können auch an weit voneinander entfernten Orten errichtet sein. Eine Windanlagenflotte kann beispielsweise einen oder mehrere Windkraftanlagenparks umfassen.

Vorzugsweise werden die Vielzahl der Beschleunigungswerte für mehr als zwei, vorzugsweise für sämtliche Windkraftanlagen der Windraftanlagenflotte innerhalb des Initialzeitintervalls und/oder innerhalb unterschiedlicher Initialzeitintervalle erfasst.

Dieses Verfahren unter Berücksichtigung der Schwingungshistorie einer Vielzahl von baugleichen Windkraftanlagen, die in einem Zeitintervall vor Erfassen der Vielzahl von Beschleunigungswerten ausgeführt werden, lässt sich auch durch folgende Verfahrensschritte beschreiben:
- Erfassen einer Vielzahl von ersten Beschleunigungswerten, die Beschleunigungen repräsentieren, die ein Bauteil der Windenergieanlage ausgesetzt ist, jeweils zu unterschiedlichen Zeitpunkten innerhalb eines vorgegebenen ersten Zeitintervalls, für zumindest zwei der Windkraftanlagen, vorzugsweise für alle der Windkraftanlagen der Windkraftanlagenflotte;
- Speichern der ersten Beschleunigungswerte in einem ersten Beschleunigungsdatensatz;
- Erzeugen einer ersten Summenhäufigkeitsverteilung basierend auf dem ersten Beschleunigungsdatensatz;
- Erzeugen einer Grenzsummenhäufigkeitsverteilung basierend auf der ermittelten ersten Summenhäufigkeitsverteilung;
- Erfassen einer Vielzahl von zweiten Beschleunigungswerten, die Beschleunigungen repräsentieren, die das Bauteil der Windenergieanlage ausgesetzt ist, jeweils zu unterschiedlichen Zeitpunkten innerhalb eines zweiten Zeitintervalls;
- Speichern der zweiten Beschleunigungswerte in einem zweiten Beschleunigungsdatensatz;
- Erzeugen einer zweiten Summenhäufigkeitsverteilung basierend auf dem zweiten Beschleunigungsdatensatz;
- Vergleichen eines Summenhäufigkeitswertes der zweiten Summenhäufigkeitsverteilung mit einem Summenhäufigkeitswert der Grenzsummenhäufigkeitsverteilung für zumindest einen Beschleunigungswert; und
- Ausgeben eines Warnsignals, wenn der Summenhäufigkeitswert der Grenzsummenhäufigkeitsverteilung größer ist als der Summenhäufigkeitswert der zweiten Summenhäufigkeitsverteilung.

Vorzugsweise wird die Grenzsummenhäufigkeitsverteilung dadurch erzeugt, dass ein Grenzbeschleunigungsdatensatz erzeugt wird, indem ein Zusatzbeschleunigungswert auf jeden der im Initialzeitintervall erfassten und im Initialbeschleunigungsdatensatz gespeicherten Beschleunigungswerten aufaddiert wird. Dieser Grenzbeschleunigungsdatensatz wird abgespeichert. Anschließend wird die Grenzsummenhäufigkeitsverteilung basierend auf dem Grenzbeschleunigungsdatensatz erzeugt.

Das entsprechend ausgebildete Verfahren bietet den Vorteil, dass durch Variation des Zusatzbeschleunigungswertes die Grenzbeschleunigungen, bei denen ein Defekt (beispielsweise eine Verminderung der strukturellen Integrität eines Bauteils der Windkraftanlage) vermutet wird, den jeweiligen Gegebenheiten (z.B. unterschiedliche Bauuntergründe usw.) leicht angepasst werden kann. Denn die Schwingungscharakteristiken einer Windenergieanlage sind nicht nur durch die Windkraftanlage (Geometrie, Materialauswahl) sondern auch z.B. durch den Bauuntergrund und die Tiefe des Einbringens eines Gründungspfahls der Windkraftanlage in den Bauuntergrund bestimmt.

Vorzugsweise weist das erfindungsgemäße Verfahren ferner folgende Verfahrensschritte auf:
- Ermitteln eines Windstärkebereichs, der die Windkraftanlage ausgesetzt ist;
- Auswählen einer Grenzsummenhäufigkeitsverteilung aus einer Vielzahl von unterschiedlichen jeweils unterschiedlichen Windstärkebereichen zugeordneten Grenzsummenhäufigkeitsverteilungen, wobei die Grenzsummenhäufigkeitsverteilung in Abhängigkeit des Windstärkenbereichs ausgewählt wird, der die Windkraftanlage ausgesetzt ist;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

Das entsprechend ausgebildete Verfahren bietet den Vorteil, dass die Ausgabe eines Warnsignals und/oder ein Abschalten der Windkraftanlage von der Windstärke abhängig gemacht wird, der die Windkraftanlage ausgesetzt ist. Denn bei größeren Windstärken ist die Windkraftanlage und die Bauteile der Windkraftanlage größeren Kräften ausgesetzt als bei kleineren Windstärken, so dass auch die Bauteile der Windkraftanlage größeren Beschleunigungen ausgesetzt sind. Somit wird durch das entsprechend ausgebildete Verfahren die Ausfallsicherheit der Windkraftanlage nochmals erhöht.

Vorzugsweise weist das erfindungsgemäße Verfahren ferner folgende Verfahrensschritte auf:
- Ermitteln einer Windrichtung des Windes, der die Windkraftanlage ausgesetzt ist;
- Auswählen einer Grenzsummenhäufigkeitsverteilung aus einer Vielzahl von unterschiedlichen jeweils unterschiedlichen Windrichtungen zugeordneten Grenzsummenhäufigkeitsverteilungen, wobei die Grenzsummenhäufigkeitsverteilung in Abhängigkeit der Windrichtung ausgewählt wird, der die Windkraftanlage ausgesetzt ist;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

Das entsprechend ausgebildete Verfahren bietet den Vorteil, dass die Ausgabe eines Warnsignals und/oder ein Abschalten der Windkraftanlage von der Windrichtung des Windes abhängig gemacht wird, der die Windkraftanlage ausgesetzt ist. Denn für unterschiedliche Windrichtungen können sich die Nachlaufverhältnisse der Windenergieanlage ändern. Das entsprechend ausgebildete Verfahren trägt diesem Umstand Rechnung.

Vorzugsweise weist das erfindungsgemäße Verfahren ferner folgende Verfahrensschritte auf:
- Ermitteln eines Blattwinkels von Rotorblättern der Windkraftanlage;
- Auswählen einer Grenzsummenhäufigkeitsverteilung aus einer Vielzahl von unterschiedlichen jeweils unterschiedlichen Blattwinkeln zugeordneten Grenzsummenhäufigkeitsverteilungen, wobei die Grenzsummenhäufigkeitsverteilung in Abhängigkeit des Blattwinkels ausgewählt wird, den die Rotorblätter aufweisen;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

Das entsprechend ausgebildete Verfahren bietet den Vorteil, dass die Ausgabe eines Warnsignals und/oder ein Abschalten der Windkraftanlage von den Blattwinkeln der Rotorblätter der Windkraftanlage abhängig gemacht wird. Denn je nach Blattwinkel der Rotorblätter werden diese durch an die Rotorblätter angreifenden Wind unterschiedlich stark zu Schwingungen angeregt, so dass sich im Betrieb der Windkraftanlage bei unterschiedlichen Blattwinkeln unterschiedliche Schwingungszustände einstellen. Das entsprechend ausgebildete Verfahren trägt diesem Umstand Rechnung.

Ferner kann das erfindungsgemäße Verfahren derart ausgebildet sein, dass auch das Maß einer Schräganströmung der Rotorblätter, die Bodensteifigkeit des Bodens, in der die Windkraftanlage eingebracht ist, Turbulenzintensitäten für die Auswahl der Grenzsummenhäufigkeitsverteilung und/oder die Leistungsbereiche der Windkraftanlage berücksichtigt werden.

Vorzugsweise wird die Grenzsummenhäufigkeitsverteilung durch folgende Verfahrensschritte erzeugt, die in einem Zeitintervall vor dem Erfassen der Vielzahl von Beschleunigungswerten ausgeführt werden:
- kontinuierliches Erfassen einer Vielzahl von Beschleunigungswerten, die Beschleunigungen repräsentieren, denen das Bauteil der Windenergieanlage ausgesetzt ist, jeweils zu unterschiedlichen Zeitpunkten innerhalb eines vorgegebenen Initialzeitintervalls;
- Speichern dieser Beschleunigungswerte in einem Initialbeschleunigungsdatensatz, der in einem Ringspeicher mit einer vorgegebenen Speichergröße gespeichert wird, so dass nach Erreichen der Speichergröße die zuletzt in den Ringspeicher gespeicherten Beschleunigungswerte die zuerst gespeicherten Beschleunigungswerte überschreiben;

- Erzeugen einer Initialsummenhäufigkeitsverteilung basierend auf dem Initialbeschleunigungsdatensatz; und
- Erzeugen der Grenzsummenhäufigkeitsverteilung basierend auf der ermittelten Initialsummenhäufigkeitsverteilung.

Das entsprechend ausgebildete Verfahren bietet den Vorteil, dass die Grenzsummenhäufigkeitsverteilung mit erhöhter Genauigkeit erzeugt werden kann, so dass die Ausfallsicherheit der Windenergieanlage nochmals erhöht wird.

Vorzugsweise wird die Grenzsummenhäufigkeitsverteilung durch folgende Verfahrensschritte erzeugt, die in einem Zeitintervall vor dem Erfassen der Vielzahl von Beschleunigungswerten ausgeführt werden:
- Ermitteln eines Leistungsbereichs der Windkraftanlage;
- Auswählen einer Grenzsummenhäufigkeitsverteilung aus einer Vielzahl von unterschiedlichen jeweils unterschiedlichen Leistungsbereichen zugeordneten Grenzsummenhäufigkeitsverteilungen, wobei die Grenzsummenhäufigkeitsverteilung in Abhängigkeit des Leistungsbereichs der Windkraftanlage ausgewählt wird;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

Das entsprechend ausgebildete Verfahren bietet den Vorteil, dass die Grenzsummenhäufigkeitsverteilung mit erhöhter Genauigkeit erzeugt werden kann, so dass die Ausfallsicherheit der Windenergieanlage nochmals erhöht wird.

Die Leistungsbereiche der Windkraftanlage können beispielsweise einen ersten Leistungsbereich von 1500kW - 3000kW, einen zweiten Leistungsbereich von 3000kW - 4500kW, einen dritten Leistungsbereich von 4500kW - 6000kW und einen vierten Leistungsbereich von mehr als 6000kW umfassen. Jedem dieser Leistungsbereiche kann eine eigene Grenzsummenhäufigkeitsverteilung zugeordnet sein.

Die Funktionsweise des erfindungsgemäßen Verfahrens wird anhand der folgenden Figuren erläutert. Dabei zeigt
- Figur 1:: zeitliche Verläufe von Turmkopfbeschleunigungen für eine Vielzahl von Windkraftanlagen, bei denen ein aus dem Stand der Technik bekanntes Verfahren zur Schwingungszustandsüberwachung angewendet wurde;
- Figur 2:: einen Ausschnitt des in Figur 1 gezeigten zeitlichen Verlaufs einer Turmkopfbeschleunigung einer Windkraftanlage, bei der ein Rotorblatt abgeworfen wurde; und
- Figur 3:: Summenhäufigkeitsverteilungen von Beschleunigungswerten einer Vielzahl von Windkraftanlagen mit einer eingezeichneten Grenzsummenhäufigkeitsverteilung zur Erläuterung des erfindungsgemäßen Verfahrens.

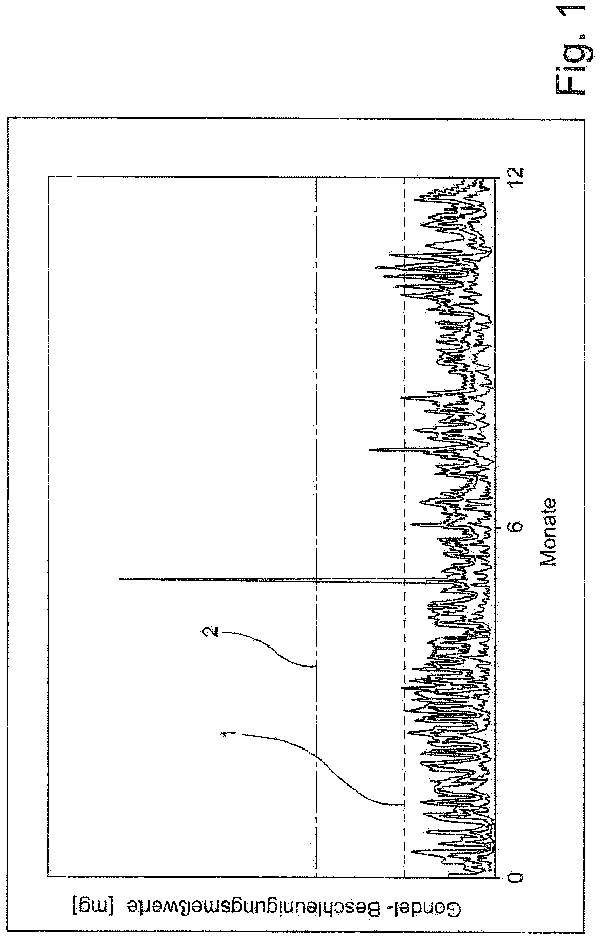

Figur 1 zeigt die zeitlichen Verläufe von Turmkopfbeschleunigungen während einer Betriebsdauer von einem Jahr für eine Vielzahl von Windkraftanlagen, bei denen ein aus dem Stand der Technik bekanntes Verfahren zur Schwingungszustandsüberwachung angewendet wurde. In dem in Figur 1 dargestellten Diagramm ist eine Warnsignalschwelle 1 und eine Stoppschwelle eingezeichnet. Wenn eine Turmkopfbeschleunigung die Warnsignalschwelle 1 überschreitet, wird ein Warnsignal ausgegeben. Wenn eine Turmkopfbeschleunigung die Stoppschwelle 2 überschreitet, wird ein Betriebsstopp der Windkraftanlage eingeleitet.

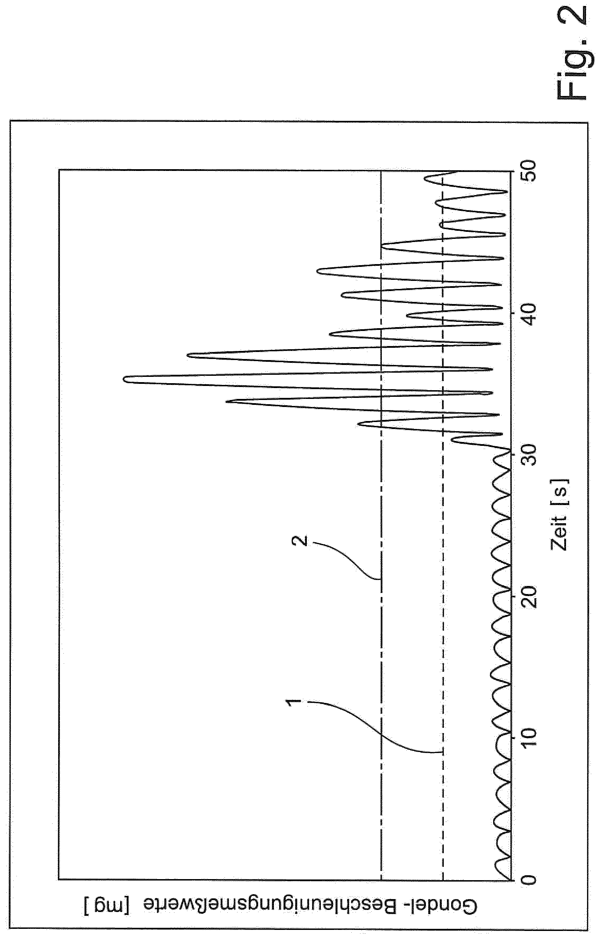

Aus Figur 1 ist ersichtlich, dass die Warnsignalschwelle nur wenige Male überschritten wurde und nur einmal aufgrund eines Rotorblattschadens die Stoppschwelle überschritten wurde. Figur 2 zeigt einen Ausschnitt des in Figur 1 gezeigten zeitlichen Verlaufs der Turmkopfbeschleunigung einer Windkraftanlage, bei der sowohl die Warnsignalschwelle und die Stoppsignalschwelle aufgrund eines Rotorblattabwurfes überschritten wurden. Mittels dem aus dem Stand der Technik bekannte Verfahren zur Schwingungszustandsüberwachung der Windkraftanlage wurde quasi zeitgleich zum Schadensereignis ein Warnsignal und ein Stoppsignal erzeugt.

Folglich besteht bei dem aus dem Stand der Technik bekannten Verfahren zur Überwachung des Schwingungszustandes einer Windkraftanlage das Problem, dass die Warnsignalschwelle 1 häufig erst erreicht wird, wenn beispielsweise die strukturelle Integrität eines Rotorblattes derart eingeschränkt ist, dass sehr kurze Zeit (wenige Sekunden) nach Überschreiten der Warnsignalschwelle 1 bereits die Stoppsignalschwelle 2 überschritten wird, weil eine Beschädigung des Rotorblattes sehr schnell voranschreitet, beispielsweise ein ganzes Rotorblatt abgeworfen wird.

Diese Form der Schwingungszustandsüberwachung ist geeignet, um kurzfristiges strukturelles Versagen durch resonanzbedingte Überlastung zu vermeiden. Für eine Zustandsbewertung der gesamten Windkraftanlage oder einzelne derer Komponenten/Bauteile, beispielsweise die Rotorblätter, ist diese Schwell- oder Grenzwertüberwachung nicht geeignet.

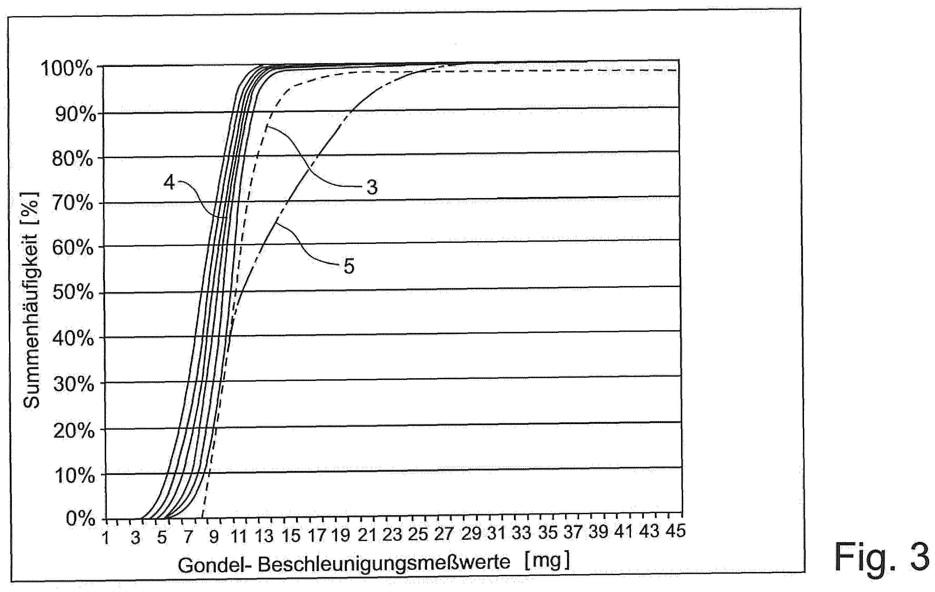

Figur 3 zeigt Summenhäufigkeitsverteilungen von Beschleunigungswerten einer Vielzahl von Windkraftanlagen mit einer eingezeichneten Grenzsummenhäufigkeitsverteilung 3. Die Grenzsummenhäufigkeitsverteilung kann beispielsweise mittels einer aeroelastischen Simulation des Windkraftanalagenverhaltens ermittelt werden.

Ferner ist es auch möglich, die Grenzsummenhäufigkeitsverteilung 3 dadurch zu erzeugen, dass in einem Zeitintervall vor dem Erfassen einer Vielzahl von Beschleunigungswerten zur Überwachung der Windkraftanlage eine Vielzahl von Beschleunigungswerten erfasst werden, die Beschleunigungen repräsentieren, denen das Bauteil der Windenergieanlage ausgesetzt ist. Dieses Erfassen der Beschleunigungswerte erfolgt zu unterschiedlichen Zeitpunkten innerhalb eines vorgegebenen Initialzeitintervalls. Die so erfassten Beschleunigungswerte werden in einem Initialbeschleunigungsdatensatz gespeichert. Anschließend wird basierend auf dem Initialbeschleunigungsdatensatz eine Initialsummenhäufigkeitsverteilung erzeugt, woraufhin die Grenzsummenhäufigkeitsverteilung 3 basierend auf der ermittelten Initialsummenhäufigkeitsverteilung erzeugt wird.

Aus Figur 3 ist ersichtlich, dass die Summenhäufigkeitsverteilungen 4 von intakten Windkraftanalagen dergestalt sind, dass etwa 10% aller Beschleunigungswerte kleiner oder gleich 7 mg, etwa 50% aller Beschleunigungswerte kleiner oder gleich 9 mg, etwa 80% aller Beschleunigungswerte kleiner oder gleich 10 mg und etwa 99% aller Beschleunigungswerte kleiner oder gleich 14 mg sind.

Aus Figur 3 ist ferner ersichtlich, dass bei der Grenzsummenhäufigkeitsverteilung 3 für einen Beschleunigungswert (z.B. 10 mg) der damit assoziierte Summenhäufigkeitswert (40% bei 10 mg, d.h. 40% aller Beschleunigungswerte sind kleiner oder gleich 10 mg) stets kleiner ist als der Summenhäufigkeitswert (75% bei 10 mg, d.h. 75% aller Beschleunigungswerte sind kleiner oder gleich 10 mg), der mit dem Beschleunigungswert (10 mg) assoziiert ist, der Summenhäufigkeitsverteilung 4 der intakten Windkraftanalagen.

In Figur 3 ist ebenfalls eine Summenhäufigkeitsverteilung 5 von Beschleunigungswerten eines Bauteils einer Windkraftanlage mit reduzierter struktureller Integrität also mit einer reduzierten Steifigkeit dargestellt. Es ist ersichtlich, dass die Windkraftanlage mit reduzierter Steifigkeit (beispielsweise bedingt durch einen Riss in einem Rotorblatt, einem Riss in einem Verbindungsbolzen, einem Riss im Turm, usw.) insgesamt größere Beschleunigungswerte aufweist als bei den intakten Windkraftanlagen. Ein Defekt der Windkraftanlage lässt sich beispielsweise dadurch diagnostizieren, dass ein erster Summenhäufigkeitswert (z.B. 80% bei 17 mg, d.h. 80% aller Beschleunigungswerte sind kleiner oder gleich 17 mg) der Summenhäufigkeitsverteilung 5 mit einem zweiten Summenhäufigkeitswert (98% bei 17 mg) der der Grenzsummenhäufigkeitsverteilung 3 verglichen wird. Dabei ist ersichtlich, dass der zweite Summenhäufigkeitswert (98%) größer als der erste Summenhäufigkeitswert (80%) ist, so dass mit großer Zuverlässigkeit ein Defekt der überprüften Windkraftanlage vorliegt und infolge dessen ein Warnsignal ausgegeben werden kann. Mittels des erfindungsgemäßen Verfahrens zur Schwingungszustandsüberwachung einer Windkraftanlage lassen sich Veränderungen und Schwächungen der strukturellen Integrität von Bauteilen der Windkraftanlage frühzeitig erkennen. Damit kann verhindert werden, dass plötzlich und überraschend ein die Funktionstüchtigkeit der Windkraftanlage verhindernder Schaden, so wie beispielsweise ein Abwerfen eines Rotorblattes der Windkraftanlage, auftritt.

### Bezugszeichenliste

- 1: Warnsignalschwelle
- 2: Stoppschwelle
- 3: Grenzsummenhäufigkeitsverteilung
- 4: Summenhäufigkeitsverteilung von intakten Windkraftanlagen
- 5: Summenhäufigkeitsverteilung einer Windkraftanlage mit reduzierter struktureller Integrität / reduzierter Steifigkeit

## Patentansprüche

1. Verfahren zur Schwingungszustandsüberwachung einer Windkraftanlage, die folgenden Verfahrensschritte aufweisend:
- Erfassen einer Vielzahl von Beschleunigungswerten, die Beschleunigungen repräsentieren, denen ein Bauteil der Windkraftanlage ausgesetzt ist, jeweils zu unterschiedlichen Zeitpunkten innerhalb eines vorgegebenen Zeitintervalls;
- Speichern der Beschleunigungswerte in einem Beschleunigungsdatensatz;
- Erzeugen einer Summenhäufigkeitsverteilung (4, 5) brasierend auf dem Beschleunigungsdatensatz;
- Vergleichen eines ersten Summenhäufigkeitswertes der Summenhäufigkeitsverteilung mit einem zweiten Summenhäufigkeitswert einer Grenzsummenhäufigkeitsverteilung (3) für zumindest einen Beschleunigungswert; und
- Ausgeben eines Warnsignals, wenn der zweite Summenhäufigkeitswert größer ist als der erste Summenhäufigkeitswert.

2. Verfahren nach Anspruch 1, **dadurch gekennzeichnet, dass** die Grenzsummenhäufigkeitsverteilung durch folgende Verfahrensschritte erzeugt wird, die in einem Zeitintervall vor dem Erfassen der Vielzahl von Beschleunigungswerten ausgeführt werden:
- Erfassen einer Vielzahl von Beschleunigungswerten, die Beschleunigungen repräsentieren, denen das Bauteil der Windkraftanlage ausgesetzt ist, jeweils zu unterschiedlichen Zeitpunkten innerhalb eines vorgegebenen Initialzeitintervalls;
- Speichern dieser Beschleunigungswerte in einem Initialbeschleunigungsdatensatz;
- Erzeugen einer Initialsummenhäufigkeitsverteilung basierend auf dem Initialbeschleunigungsdatensatz; und
- Erzeugen der Grenzsummenhäufigkeitsverteilung basierend auf der ermittelten Initialsummenhäufigkeitsverteilung.

3. Verfahren nach einem der vorhergehenden Ansprüchen, **dadurch gekennzeichnet, dass** die Grenzsummenhäufigkeitsverteilung für eine Windkraftanlage einer Windkraftanlagenflotte bestehend aus einer Vielzahl von baugleichen Windkraftanlagen durch folgende Verfahrensschritte erzeugt wird, die in einem Zeitintervall vor Erfassen der Vielzahl von Beschleunigungswerten ausgeführt werden:
- für zumindest zwei Windkraftanlagen der Windkraftanlagenflotte Erfassen einer Vielzahl von Beschleunigungswerten, die Beschleunigungen repräsentieren, denen das Bauteil der jeweiligen Windkraftanlage ausgesetzt ist, jeweils zu unterschiedlichen Zeitpunkten innerhalb eines vorgegebenen Initialzeitintervalls;
- Speichern dieser Beschleunigungswerte in einem Initialbeschleunigungsdatensatz;
- Erzeugen einer Initialsummenhäufigkeitsverteilung basierend auf dem Initialbeschleunigungsdatensatz; und
- Erzeugen der Grenzsummenhäufigkeitsverteilung basierend auf der ermittelten Initialsummenhäufigkeitsverteilung.

4. Verfahren nach einem der Ansprüche 2 oder 3, **dadurch gekennzeichnet, dass** die Grenzsummenhäufigkeitsverteilung durch folgende Verfahrensschritte erzeugt wird:
- Erzeugen eines Grenzbeschleunigungsdatensatzes durch Addieren eines Zusatzbeschleunigungswertes auf jeden der im Initialzeitintervall erfassten und im Initialbeschleunigungsdatensatz gespeicherten Beschleunigungswerten;
- Speichern des Grenzbeschleunigungsdatensatzes; und
- Erzeugen der Grenzsummenhäufigkeitsverteilung basierend auf dem Grenzbeschleunigungsdatensatz.

5. Verfahren nach einem der vorhergehenden Ansprüche, **gekennzeichnet durch** die folgenden Verfahrensschritte:
- Ermitteln eines Windstärkebereichs und/oder einer Windrichtung des Windes, der die Windkraftanlage ausgesetzt ist;
- Auswählen einer Grenzsummenhäufigkeitsverteilung aus einer Vielzahl von unterschiedlichen jeweils unterschiedlichen Windstärkebereichen und/oder unterschiedlichen Windrichtungen zugeordneten Grenzsummenhäufigkeitsverteilungen, wobei die Grenzsummenhäufigkeitsverteilung in Abhängigkeit des Windstärkenbereichs und/oder der Windrichtung ausgewählt wird, der die Windkraftanlage ausgesetzt ist;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

6. Verfahren nach einem der vorhergehenden Ansprüche, **gekennzeichnet durch** die folgenden Verfahrensschritte:
- Ermitteln einer Windrichtung des Windes, der die Windkraftanlage ausgesetzt ist;
- Auswählen einer Grenzsummenhäufigkeitsverteilung aus einer Vielzahl von unterschiedlichen jeweils unterschiedlichen Windrichtungen zugeordneten Grenzsummenhäufigkeitsverteilungen, wobei die Grenzsummenhäufigkeitsverteilung in Abhängigkeit der Windrichtung ausgewählt wird, der die Windkraftanlage ausgesetzt ist;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

7. Verfahren nach einem der vorhergehenden Ansprüche, **gekennzeichnet durch** die folgenden Verfahrensschritte:
- Ermitteln eines Blattwinkels von Rotorblättern der Windkraftanlage;
- Auswählen einer Grenzsummenhäufigkeitsverteilung aus einer Vielzahl von unterschiedlichen jeweils unterschiedlichen Blattwinkeln zugeordneten Grenzsummenhäufigkeitsverteilungen, wobei die Grenzsummenhäufigkeitsverteilung in Abhängigkeit des Blattwinkels ausgewählt wird, den die Rotorblätter aufweisen;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

8. Verfahren nach einem der vorhergehenden Ansprüche, **dadurch gekennzeichnet,** die Grenzsummenhäufigkeitsverteilung durch folgende Verfahrensschritte erzeugt wird, die in einem Zeitintervall vor dem Erfassen der Vielzahl von Beschleunigungswerten ausgeführt werden:
- kontinuierliches Erfassen einer Vielzahl von Beschleunigungswerten, die Beschleunigungen repräsentieren, denen das Bauteil der Windkraftanlage ausgesetzt ist, jeweils zu unterschiedlichen Zeitpunkten innerhalb eines vorgegebenen Initialzeitintervalls;
- Speichern dieser Beschleunigungswerte in einem Initialbeschleunigungsdatensatz, der in einem Ringspeicher mit einer vorgegebenen Speichergröße gespeichert wird, so dass nach Erreichen der Speichergröße die zuletzt in den Ringspeicher gespeicherten Beschleunigungswerte die zuerst gespeicherten Beschleunigungswerte überschreiben;
- Erzeugen einer Initialsummenhäufigkeitsverteilung basierend auf dem Initialbeschleunigungsdatensatz; und
- Erzeugen der Grenzsummenhäufigkeitsverteilung basierend auf der ermittelten Initialsummenhäufigkeitsverteilung.

9. Verfahren nach einem der vorhergehenden Ansprüche, **gekennzeichnet durch** die folgenden Verfahrensschritte:
- Ermitteln eines Leistungsbereichs der Windkraftanlage;
- Auswählen einer Grenzsummenhäufigkeitsverteilung aus einer Vielzahl von unterschiedlichen jeweils unterschiedlichen Leistungsbereichen zugeordneten Grenzsummenhäufigkeitsverteilungen, wobei die Grenzsummenhäufigkeitsverteilung in Abhängigkeit des Leistungsbereichs der Windkraftanlage ausgewählt wird;
- Vergleichen eines ersten Summenhäufigkeitswertes der Summenhäufigkeitsverteilung mit einem zweiten Summenhäufigkeitswert der Grenzsummenhäufigkeitsverteilung für zumindest einen Beschleunigungswert; und
- Ausgeben eines Warnsignals, wenn der zweite Summenhäufigkeitswert größer ist als der erste Summenhäufigkeitswert.

10. Windkraftanlage mit zumindest einem Beschleunigungssensor und einer mit dieser über eine Datenleitung verbundene Datenverarbeitungseinrichtung, wobei die Datenverarbeitungseinrichtung dazu angepasst ist, ein Verfahren nach einem der Ansprüche 1 bis 9 auszuführen.

## Claims

1. A method for monitoring the vibration state of a wind turbine, having the following method steps:
- detecting a plurality of acceleration values, which represent accelerations to which a component of the wind turbine is subjected, each at different points in time within a predefined time interval;
- storing the acceleration values in an acceleration dataset;
- generating a cumulative frequency distribution (4,5) based on the acceleration dataset;
- comparing a first cumulative frequency value of the cumulative frequency distribution to a second cumulative frequency value of a limiting cumulative frequency distribution for at least one acceleration value; and
- outputting a warning signal if the second cumulative frequency value is greater than the first cumulative frequency value.

2. The method as claimed in claim 1, **characterized in that** the limiting cumulative frequency distribution is generated by the following method steps, which are executed in a time interval before the detection of the plurality of acceleration values:
- detecting a plurality of acceleration values, which represent accelerations to which the component of the wind turbine is subjected, each at different points in time within a predefined initial time interval;
- storing these acceleration values in an initial acceleration dataset;
- generating an initial cumulative frequency distribution based on the initial acceleration dataset; and
- generating the limiting cumulative frequency distribution based on the determined initial cumulative frequency distribution.

3. The method as claimed in either one of the preceding claims, **characterized in that** the limiting cumulative frequency distribution for a wind turbine of a wind turbine fleet consisting of a plurality of structurally-equivalent wind turbines is generated by the following method steps, which are executed in a time interval before detecting the plurality of acceleration values:
- for at least two wind turbines of the wind turbine fleet, detecting a plurality of acceleration values, which represent accelerations to which the component of the respective wind turbine is subjected, each at different points in time within a predefined initial time interval;
- storing these acceleration values in an initial acceleration dataset;
- generating an initial cumulative frequency distribution based on the initial acceleration dataset; and
- generating the limiting cumulative frequency distribution based on the determined initial cumulative frequency distribution.

4. The method as claimed in either one of claims 2 and 3, **characterized in that** the limiting cumulative frequency distribution is generated by the following method steps:
- generating a limiting acceleration dataset by adding an additional acceleration value to each of the acceleration values detected in the initial time interval and stored in the initial acceleration dataset;
- storing the limiting acceleration dataset; and
- generating the limiting cumulative frequency distribution based on the limiting acceleration dataset.

5. The method as claimed in any one of the preceding claims, **characterized by** the following method steps:
- determining a wind strength range and/or a wind direction of the wind to which the wind turbine is subjected;
- selecting a limiting cumulative frequency distribution from a plurality of different limiting cumulative frequency distributions which are each associated with different wind strength ranges and/or different wind directions, wherein the limiting cumulative frequency distribution is selected as a function of the wind strength range and/or the wind direction to which the wind turbine is subjected;
- comparing a first cumulative frequency value of the cumulative frequency distribution to a second cumulative frequency value of the limiting cumulative frequency distribution for at least one acceleration value; and
- outputting a warning signal if the second cumulative frequency value is greater than the first cumulative frequency value.

6. The method as claimed in any one of the preceding claims, **characterized by** the following method steps:
- determining a wind direction of the wind to which the wind turbine is subjected;
- selecting a limiting cumulative frequency distribution from a plurality of different limiting cumulative frequency distributions which are each associated with different wind directions, wherein the limiting cumulative frequency distribution is selected as a function of the wind direction to which the wind turbine is subjected;
- comparing a first cumulative frequency value of the cumulative frequency distribution to a second cumulative frequency value of the limiting cumulative frequency distribution for at least one acceleration value; and
- outputting a warning signal if the second cumulative frequency value is greater than the first cumulative frequency value.

7. The method as claimed in any one of the preceding claims, **characterized by** the following method steps:
- determining a blade angle of rotor blades of the wind turbine;
- selecting a limiting cumulative frequency distribution from a plurality of different limiting cumulative frequency distributions which are each associated with different blade angles, wherein the limiting cumulative frequency distribution is selected as a function of the blade angle which the rotor blades have;
- comparing a first cumulative frequency value of the cumulative frequency distribution to a second cumulative frequency value of the limiting cumulative frequency distribution for at least one acceleration value; and
- outputting a warning signal if the second cumulative frequency value is greater than the first cumulative frequency value.

8. The method as claimed in any one of the preceding claims, **characterized in that** the limiting cumulative frequency distribution is generated by the following method steps, which are executed in a time interval before the detection of the plurality of acceleration values:
- continuously detecting a plurality of acceleration values, which represent accelerations to which the component of the wind turbine is subjected, each at different points in time within a predefined initial time interval;
- storing these acceleration values in an initial acceleration dataset, which is stored in a ring memory having a predefined memory size, and therefore, after reaching the memory size, the acceleration values stored last in the ring memory overwrite the acceleration values stored first;
- generating an initial cumulative frequency distribution based on the initial acceleration dataset; and
- generating the limiting cumulative frequency distribution based on the determined initial cumulative frequency distribution.

9. The method as claimed in any one of the preceding claims, **characterized by** the following method steps:
- determining a power range of the wind turbine;
- selecting a limiting cumulative frequency distribution from a plurality of different limiting cumulative frequency distributions which are each associated with different power ranges, wherein the limiting cumulative frequency distribution is selected as a function of the power range of the wind turbine;
- comparing a first cumulative frequency value of the cumulative frequency distribution to a second cumulative frequency value of the limiting cumulative frequency distribution for at least one acceleration value; and
- outputting a warning signal if the second cumulative frequency value is greater than the first cumulative frequency value.

10. A wind turbine comprising at least one acceleration sensor and a data processing unit connected thereto via a data line, wherein the data processing unit is customized for the purpose of executing a method as claimed in any one of claims 1 to 9.

## Revendications

1. Procédé pour surveiller l'état oscillatoire d'une éolienne, comprenant les étapes de procédé suivantes :
- acquisition d'une pluralité de valeurs d'accélération, qui représentent des accélérations, auxquelles un composant de l'éolienne est soumis, respectivement à des moments différents dans un intervalle de temps prédéfini ;
- enregistrement des valeurs d'accélération dans un jeu de données d'accélération ;
- génération d'une distribution de fréquences cumulées (4, 5) sur la base du jeu de données d'accélération ;
- comparaison d'une première valeur de fréquence cumulée de la distribution de fréquences cumulées avec une seconde valeur de fréquence cumulée d'une distribution de fréquences cumulées limite pour au moins une valeur d'accélération ; et
- émission d'un signal d'avertissement, quand la seconde valeur de fréquence cumulée est supérieure à la première valeur de fréquence cumulée.

2. Procédé selon la revendication 1, **caractérisé en ce que** la distribution de fréquences cumulées limite est générée par les étapes de procédé suivantes, qui sont exécutées dans un intervalle de temps précédant l'acquisition de la pluralité de valeurs d'accélération :
- acquisition d'une pluralité de valeurs d'accélération, qui représentent des accélérations, auxquelles le composant de l'éolienne est soumis, respectivement à des moments différents dans un intervalle de temps initial prédéfini ;
- enregistrement de ces valeurs d'accélération dans un jeu de données d'accélération initial ;
- génération d'une distribution de fréquences cumulées initiale sur la base du jeu de données d'accélération initial ; et
- génération de la distribution de fréquences cumulées limite sur la base de la distribution de fréquences cumulées initiale déterminée.

3. Procédé selon l'une des revendications précédentes, **caractérisé en ce que** la distribution de fréquences cumulées limite pour une éolienne d'un parc d'éoliennes consistant en une pluralité d'éoliennes de construction semblable est générée par les étapes de procédé suivantes, qui sont exécutées dans un intervalle de temps précédant l'acquisition de la pluralité de valeurs d'accélération :
- pour au moins deux éoliennes du parc d'éoliennes, acquisition d'une pluralité de valeurs d'accélération, qui représentent des accélérations, auxquelles le composant de l'éolienne respective est soumis, respectivement à des moments différents dans un intervalle de temps initial prédéfini ;
- enregistrement de ces valeurs d'accélération dans un jeu de données d'accélération initial ;
- génération d'une distribution de fréquences cumulées initiale sur la base du jeu de données d'accélération initial ; et
- génération de la distribution de fréquences cumulées limite sur la base de la distribution de fréquences cumulées initiale déterminée.

4. Procédé selon l'une des revendications 2 et 3, **caractérisé en ce que** la distribution de fréquences cumulées limite est générée par les étapes de procédé suivantes :
- génération d'un jeu de données d'accélération limite en additionnant une valeur d'accélération supplémentaire à chacune des valeurs d'accélération acquises dans l'intervalle de temps initial et enregistrées dans le jeu de données d'accélération initial ;
- enregistrement du jeu de données d'accélération limite ; et
- génération de la distribution de fréquences cumulées limite sur la base du jeu de données d'accélération limite.

5. Procédé selon l'une des revendications précédentes, **caractérisé par** les étapes de procédé suivantes :
- détermination d'une plage d'intensité du vent et/ou d'une direction du vent, auxquelles est soumise l'éolienne ;
- sélection d'une distribution de fréquences cumulées limite parmi une pluralité de distributions de fréquences cumulées limites différentes respectivement associées à différentes plages d'intensité du vent et/ou différentes directions du vent, la distribution de fréquences cumulées limite étant sélectionnée en fonction de la plage d'intensité du vent et/ou de la direction du vent, auxquelles est soumise l'éolienne;
- comparaison d'une première valeur de fréquence cumulée de la distribution de fréquences cumulées avec une seconde valeur de fréquence cumulée de la distribution de fréquences cumulées limite pour au moins une valeur d'accélération ; et
- émission d'un signal d'avertissement, quand la seconde valeur de fréquence cumulée est supérieure à la première valeur de fréquence cumulée.

6. Procédé selon l'une des revendications précédentes, **caractérisé par** les étapes de procédé suivantes :
- détermination d'une direction du vent, à laquelle est soumise l'éolienne ;
- sélection d'une distribution de fréquences cumulées limite parmi une pluralité de distributions de fréquences cumulées limites différentes respectivement associées à différentes directions du vent, la distribution de fréquences cumulées limite étant sélectionnée en fonction de la direction du vent, à laquelle l'éolienne est soumise ;
- comparaison d'une première valeur de fréquence cumulée de la distribution de fréquences cumulées avec une seconde valeur de fréquence cumulée de la distribution de fréquences cumulées limite pour au moins une valeur d'accélération ; et
- émission d'un signal d'avertissement, quand la seconde valeur de fréquence cumulée est supérieure à la première valeur de fréquence cumulée.

7. Procédé selon l'une des revendications précédentes, **caractérisé par** les étapes de procédé suivantes :
- détermination d'un angle de pale de pales de rotor de l'éolienne ;
- sélection d'une distribution de fréquences cumulées limite parmi une pluralité de distributions de fréquences cumulées limites différentes respectivement associées à différents angles de pale, la distribution de fréquences cumulées limite étant sélectionnée en fonction de l'angle de pale que présentent les pales de rotor ;
- comparaison d'une première valeur de fréquence cumulée de la distribution de fréquences cumulées avec une seconde valeur de fréquence cumulée de la distribution de fréquences cumulées limite pour au moins une valeur d'accélération ; et
- émission d'un signal d'avertissement, quand la seconde valeur de fréquence cumulée est supérieure à la première valeur de fréquence cumulée.

8. Procédé selon l'une des revendications précédentes, **caractérisé en ce que** la distribution de fréquences cumulées limite est générée par les étapes de procédé suivantes, qui sont exécutées dans un intervalle de temps précédant l'acquisition de la pluralité de valeurs d'accélération :
- acquisition en continu d'une pluralité de valeurs d'accélération, qui représentent des accélérations, auxquelles le composant de l'éolienne est soumis, respectivement à des moments différents dans un intervalle de temps initial prédéfini ;
- enregistrement de ces valeurs d'accélération dans un jeu de données d'accélération initial, qui est enregistré dans un buffer circulaire doté d'une capacité de mémoire prédéfinie, de sorte que, après que la capacité de mémoire est atteinte, les dernières valeurs d'accélération enregistrées dans le buffer circulaire écrasent les premières valeurs d'accélération enregistrées ;
- génération d'une distribution de fréquences cumulées initiale sur la base du jeu de données d'accélération initial ; et
- génération de la distribution de fréquences cumulées limite sur la base de la distribution de fréquences cumulées initiale déterminée.

9. Procédé selon l'une des revendications précédentes, **caractérisé par** les étapes de procédé suivantes :
- détermination d'une plage de puissance de l'éolienne ;
- sélection d'une distribution de fréquences cumulées limite parmi une pluralité de distributions de fréquences cumulées limites différentes respectivement associées à différentes plages de puissance, la distribution de fréquences cumulées limite étant sélectionnée en fonction de la plage de puissance de l'éolienne ;
- comparaison d'une première valeur de fréquence cumulée de la distribution de fréquences cumulées avec une seconde valeur de fréquence cumulée de la distribution de fréquences cumulées limite pour au moins une valeur d'accélération ; et
- émission d'un signal d'avertissement, quand la seconde valeur de fréquence cumulée est supérieure à la première valeur de fréquence cumulée.

10. Éolienne comprenant au moins un capteur d'accélération et un dispositif de traitement de données relié à celle-ci par une ligne de données, le dispositif de traitement de données étant adapté pour exécuter un procédé selon l'une des revendications 1 à 9.
